# EUROPEAN PATENT SPECIFICATION

(11) **EP 3 675 207 B1**
(45) Date of publication and mention of the grant of the patent: **06.03.2024**
(21) Application number: 19215093.6
(22) Date of filing: 11.12.2019
(51) Int. Cl.: H01M 10/6556, H01M 50/24, H01M 50/184, H01M 50/186, H01M 50/211, H01M 50/224, H01M 50/227, H01M 50/231, H01M 50/262, H01M 50/271, H01M 10/613, H01M 10/615, H01M 10/625

(54) **BATTERY BOX**
BATTERIEKASTEN
BOÎTIER DE BATTERIE

(30) Priority: 29.12.2018 CN 201822266524 U
(43) Date of publication of application: 01.07.2020
(73) Proprietor: Contemporary Amperex Technology Co., Limited, Jiaocheng District Ningde City, Fujian 352100 (CN)
(72) Inventor: WANG, Heng, Ningde, Fujian 352100 (CN); JI, Jinqing, Ningde, Fujian 352100 (CN); ZHANG, Wenhui, Ningde, Fujian 352100 (CN); QIAN, Mu, Ningde, Fujian 352100 (CN); XIANG, Yanhuo, Ningde, Fujian 352100 (CN)
(74) Representative: Ran, Handong

(56) References cited:
- CN-A- 107 732 061
- CN-A- 108 063 202
- CN-U- 207 165 693
- CN-U- 207 977 365
- US-A1- 2016 020 446
- US-A1- 2016 288 737

## Description

### RELATED APPLICATIONS

The present application claims priority to Chinese patent application No. CN201822266524.1, filed on December 29, 2018.

### TECHNICAL FIELD

The present invention relates to the field of battery, and more specifically relates to a battery box.

### BACKGROUND

In the field of battery, a battery box comprises a lower frame, a heat exchanging plate and a protecting plate, the lower frame and the heat exchanging plate form an accommodating space for accommodating a battery module. The battery module comprises a plurality of arranged batteries, the battery module is supported on the heat exchanging plate, and the heat exchanging plate supports the battery and exchanges heat with the battery. The lower frame, the heat exchanging plate and the protecting plate are connected together by conventional fasteners, such as screws, bolts or rivets, provided along the circumference. However, it is necessary to seal these conventional fasteners with a separate sealing means to prevent external moisture from entering into the accommodating space through the fasteners. This leads to assembling process complicated and the cost increased.
The features of the preamble of the independent claim are known from CN 107 732 061 A. Related technologies are known from CN 108 063 202 A, CN 207 165 693 U, CN 207 977 365 U, US 2016/020446 A1 and US 2016/288737 A1.

### SUMMARY

In view of the problem existing in the background, an object of the present invention is to provide a battery box, which can solve a sealing problem on conventional fasteners, thereby simplifying the assembling process and reducing the cost. The present invention is defined in the independent claim.

In order to achieve the above object, the present invention provides a battery box, which comprises: a heat exchanging plate; a lower frame positioned on the heat exchanging plate, the lower frame and the heat exchanging plate together form an accommodation space opening upwardly and accommodating a battery, the heat exchanging plate is used to support the battery and exchange heat with the battery, the lower frame is a hollow structure with a hollow cavity; a protecting plate positioned below the heat exchanging plate and protecting the heat exchanging plate from below; and a self-sealing riveting member fixing the protecting plate, the heat exchanging plate and the lower frame together, the self-sealing riveting member passes through the protecting plate and the heat exchanging plate along an up-down direction, and the self-sealing riveting member is inserted into the lower frame and at least partially exposed to the lower frame, the self-sealing riveting member performs sealing at a first position where the self-sealing riveting member passes through the protecting plate, the self-sealing riveting member performs sealing at a second position where the self-sealing riveting member is inserted into the lower frame.

In the invention, the lower frame comprises a bottom wall and a top wall, the self-sealing riveting member is a pulling riveting member and comprises a pulling riveting nut and a pulling riveting bolt, the pulling riveting nut comprises an internal thread tube body and a convex portion, the convex portion surrounds the internal thread tube body and protrudes outwardly along a radial direction from an end of the internal thread tube body; the pulling riveting bolt comprises an external threaded column and a cover portion, the cover portion surrounds the external threaded column and protrudes outwardly along the radial direction from an end of the external threaded column; the internal thread tube body passes through the protecting plate, the heat exchanging plate and the bottom wall of the lower frame, and the internal thread tube body is partially exposed to an outer side of the protecting plate, the heat exchanging plate and the bottom wall of the lower frame in the up-down direction; the external threaded column penetrates from an opposite outer side of the protecting plate, the heat exchanging plate and the bottom wall of the lower frame in the up-down direction and the external threaded column is in threaded engagement with the internal thread tube body; the convex portion of the pulling riveting nut abuts against a side of the bottom wall of the lower frame close to the cover portion of the pulling riveting bolt along the up-down direction; the exposed portion of the internal thread tube body of the pulling riveting nut is configured to form a protruding portion through pulling riveting operation; the protruding portion of the internal thread tube body of the pulling riveting nut and the cover portion of the pulling riveting bolt perform sealing from opposite sides of the up-down direction of the protecting plate, the heat exchanging plate and the bottom wall of the lower frame, the first position is positioned at the protecting plate, the second position is positioned at one of the bottom wall and the top wall of the lower frame which is adjacent to the convex portion from above.

In an embodiment, the external threaded column of the pulling riveting bolt passes through the protecting plate at the first position from below the protecting plate along the up-down direction, the external threaded column of the pulling riveting bolt passes through the heat exchanging plate, the external threaded column of the pulling riveting bolt is inserted into the bottom wall of the lower frame at the second position, and the external threaded column of the pulling riveting bolt is exposed in the hollow cavity of the lower frame; the exposed portion of the internal thread tube body of the pulling riveting nut is positioned in the hollow cavity of the lower frame; the convex portion of the pulling riveting nut is positioned at a lower side of the bottom wall of the lower frame along the up-down direction.

In an embodiment, the external threaded column of the pulling riveting bolt is inserted into the top wall of the lower frame from above the lower frame along the up-down direction at the second position, the external threaded column of the pulling riveting bolt passes through the bottom wall of the lower frame, the external threaded column of the pulling riveting bolt passes through the heat exchanging plate, the external threaded column of the pulling riveting bolt passes through the protecting plate at the first position, and the external threaded column of the pulling riveting bolt is exposed below the protecting plate; the exposed portion of the internal thread tube body of the pulling riveting nut is positioned below the protecting plate.

In an embodiment, the protecting plate is provided with a first recessed portion, the exposed portion of the internal thread tube body of the pulling riveting nut is positioned in the first recessed portion.

In an embodiment, the convex portion of the pulling riveting nut is positioned at the lower side of the bottom wall of the lower frame along the up-down direction; the convex portion is directly clamped by the bottom wall of the lower frame and the protecting plate.

In an embodiment, the convex portion is directly clamped by the heat exchanging plate and the protecting plate.

In an embodiment, the protecting plate is provided with a second recessed portion, the convex portion is accommodated in the second recessed portion.

In an embodiment not of the invention, the lower frame comprises a bottom wall and a top wall, the self-sealing riveting member is a pressing riveting member and comprises a pressing riveting nut and a pressing riveting bolt, the pressing riveting nut comprises a hat body, a nut embossing teeth, a nut guiding groove and an internal thread tube portion, the nut embossing teeth, the nut guiding groove and the internal thread tube portion are provided to an inner side of an axial direction of the hat body, the pressing riveting bolt comprises a hat portion, a bolt embossing teeth, a bolt guiding groove and an external threaded rod portion, the bolt embossing teeth, the bolt guiding groove and the external threaded rod portion are provided to an inner side of the axial direction of the hat portion; the hat portion of the pressing riveting bolt and the hat body of the pressing riveting nut are respectively positioned to opposite sides of the up-down direction of the protecting plate, the heat exchanging plate and the top wall of the lower frame, the internal thread tube portion of the pressing riveting nut and the external threaded rod portion of the pressing riveting bolt pass through the protecting plate, the heat exchanging plate and the lower frame and perform engagement, the bolt embossing teeth of the pressing riveting bolt deforms a corresponding position where the bolt embossing teeth of the pressing riveting bolt passes through to be sealed and locked with the bolt guiding groove of the pressing riveting bolt, and the nut embossing teeth of the pressing riveting nut deforms a corresponding position where the nut embossing teeth of the pressing riveting nut passes through to be sealed and locked with the nut guiding groove of the pressing riveting nut, the first position is positioned at the protecting plate, the second position is positioned at the top wall of the lower frame.

In an embodiment not of the invention, the pressing riveting bolt passes through the protecting plate at the first position from below the protecting plate along the up-down direction, the pressing riveting bolt passes through the heat exchanging plate and the bottom wall of the lower frame, so as to at least seal the position where the pressing riveting bolt passes through the protecting plate, the pressing riveting nut is downwardly inserted into the top wall and the bottom wall of the lower frame at the second position along the up-down direction, and seals the position where the pressing riveting nut is inserted into the top wall; or the pressing riveting bolt is downwardly inserted into the top wall of the lower frame at the second position along the up-down direction and passes through the bottom wall of the lower frame, and seals the position where the pressing riveting bolt is inserted into the top wall; the pressing riveting nut passes through the protecting plate at the first position from below the protecting plate along the up-down direction, the pressing riveting nut passes through the heat exchanging plate and the bottom wall of the lower frame, so as to at least seal the position where the pressing riveting nut passes through the protecting plate.

The present invention has the following beneficial effects: the self-sealing riveting member can directly perform sealing at a first position where the self-sealing riveting member passes through the protecting plate and a second position where the self-sealing riveting member is inserted into the lower frame, but conventional screws or rivets cannot directly perform sealing at the insertion/passing through position, and require additional sealing means to seal the insertion/passing through position, therefore the present invention simplifies the assembling process and reduces the cost.

### BRIEF DESCRIPTION OF THE DRAWINGS

FIG. 1 is an exploded perspective view of a battery box according to the present invention, in which a battery module is shown for sake of clarity.
FIG. 2 is a top perspective view of the battery box according to the present invention.
FIG. 3 is a bottom perspective view of the battery box according to the present invention.
FIG. 4 is a bottom view of FIG. 2.
FIG. 5 is an exploded cross-sectional view of a form of a self-sealing riveting member.
FIG. 6A is a cross-sectional view taken along a line A-A in FIG. 4 and rotated by 180 degrees, in which a pulling riveting member is not pulling-riveted.
FIG. 6B is a cross-sectional view corresponding to FIG. 6A, in which the pulling riveting member has been pulling-riveted.
FIG. 7A is a cross-sectional view corresponding to FIG. 6A, in which the pulling riveting member is rotated by 180 degrees and not pulling-riveted.
FIG. 7B is a cross-sectional view corresponding to FIG. 7A, in which the pulling riveting member has been pulling-riveted.
FIG. 8A is a cross-sectional view taken along a line B-B in FIG. 4 and rotated by 180 degrees, in which the pulling riveting member is not pulling-riveted.
FIG. 8B is a cross-sectional view corresponding to FIG. 8A, in which the pulling riveting member has been pulling-riveted.
FIG. 9A is a cross-sectional view corresponding to FIG. 8A, in which the pulling riveting member is rotated by 180 degrees and is not pulling-riveted.
FIG. 9B is a cross-sectional view corresponding to FIG. 9A, in which the pulling riveting member has been pulling-riveted.
FIG. 10A is a cross-sectional view taken along a line C-C in FIG. 4 and rotated by 180 degrees with an inner beam only showing a bottom wall and the pulling riveting member not pulling-riveted.
FIG. 10B is a cross-sectional view corresponding to FIG. 10A, in which the pulling riveting member has been pulling-riveted.
FIG. 11 is an exploded view of another form of the self-sealing riveting member.
FIG. 12A is a cross-sectional view of another form of assembling of the self-sealing riveting member with a heat exchanging plate, the inner beam and a protecting plate of the battery box, in which the pressing riveting member is not pressing-riveted.
FIG. 12B is a cross-sectional view corresponding to FIG. 12A, in which the pressing riveting member is rotated by 180 degrees and is not pressing-riveted.

Reference numerals in figures are represented as follows:
X left-right direction
Y front-rear direction
Z up-down direction
1 heat exchanging plate
   11 flow passage portion
      F flow passage
   12 circumferential edge portion
   13 first plate
   14 second plate
2 lower frame
   21 bottom wall
   22 top wall
   2A edge frame beam
   2B inner beam
   S hollow cavity
3 protecting plate
   31 main portion
   32 outer peripheral portion
   R1 first recessed portion
   R2 second recessed portion
4 self-sealing riveting member
   41 pulling riveting nut
      411 internal thread tube body
         411a protruding portion
      412 convex portion
   42 pulling riveting bolt
      421 external threaded column
      422 cover portion
   43 gasket
   44 pressing riveting nut
      441 hat body
      442 nut embossing teeth
      443 nut guiding groove
      444 internal thread tube portion
   45 pressing riveting bolt
      451 hat portion
      452 bolt embossing teeth
      453 bolt guiding groove
      454 external threaded rod portion
P1 first position
P2 second position
5 battery module
   51 battery
6 heat insulating pad

### DETAILED DESCRIPTION

The drawings illustrate embodiments of the present invention, and it will be understood that the disclosed embodiments are merely examples of the present invention, which can be implemented in various forms. Therefore, the specific details disclosed herein should not be construed as limitations, but as a basis of claims and as a basis of representativeness to instruct an ordinary person of skill in the art to implement the present invention in various ways.

In addition, expressions indicating directions such as up, down, left, right, front, and back that are used to describe the operation and configuration of each part in embodiments are relative and not absolute, and are suitable when each part is in the orientation illustrated by the drawings; however, when the orientation of each part is changed, then these expressions should be interpreted to change corresponding to the changes in orientation.

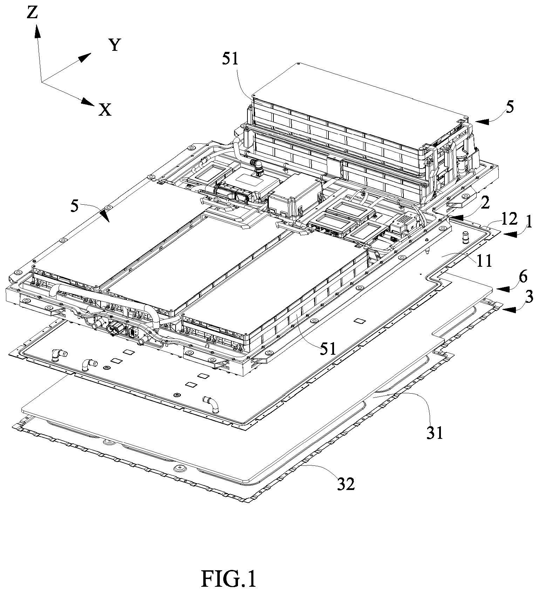

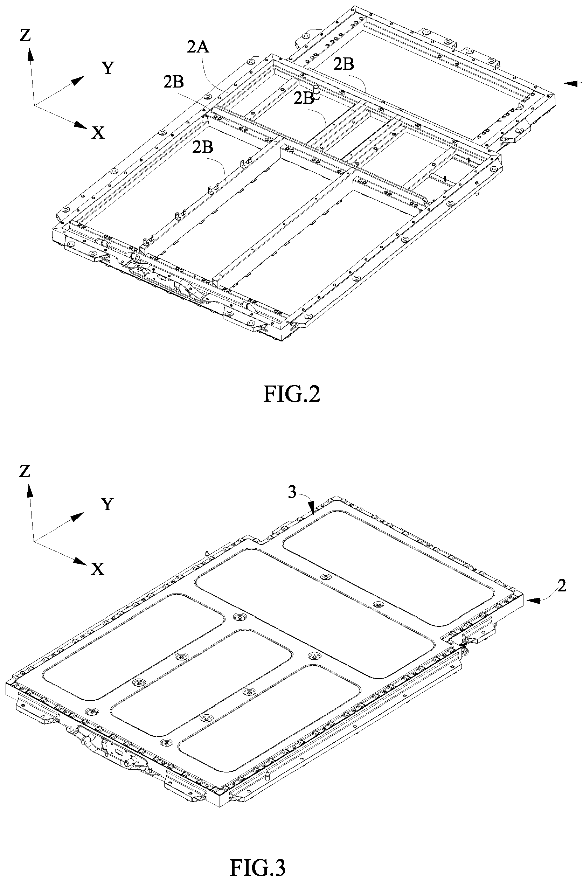

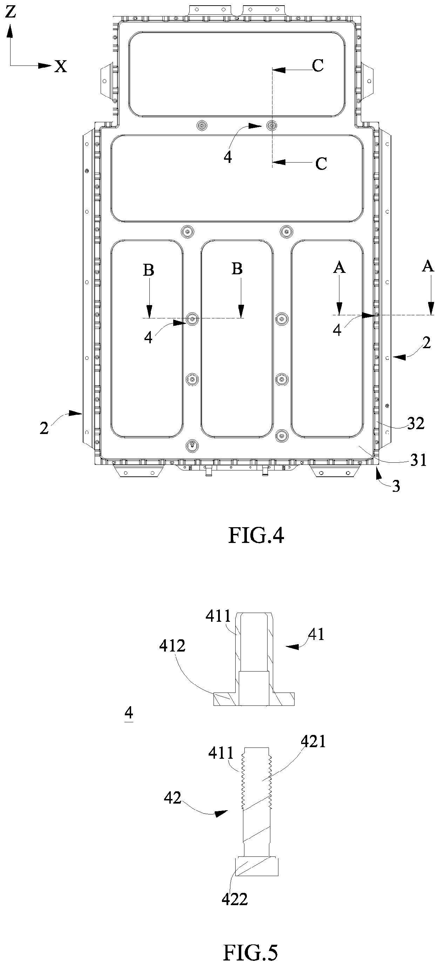

FIG. 1 is an exploded perspective view of a battery box according to the present invention, in which a battery module is shown for sake of clarity. FIG. 2 is a top perspective view of the battery box according to the present invention. FIG. 3 is a bottom perspective view of the battery box according to the present invention. FIG. 4 is a bottom view of FIG. 2.

A battery box according to the present invention comprises a heat exchanging plate 1, a lower frame 2, a protecting plate 3 and a self-sealing riveting member 4. The battery box further comprises a heat insulating pad 6, the heat insulating pad 6 is provided between the heat exchanging plate 1 and the protecting plate 3. With the configuration of the heat insulating pad 6, at least the heat transfer of the heat exchanging plate 1 in a downward direction is blocked, thereby heat insulating a battery 51 of a battery module 5. A material of the heat insulating pad 6 may be a heat insulating cotton, a foam and the like. The battery 51 may generally comprise a case and an electrode assembly and an electrolyte accommodated in the case. The electrode assembly comprises a positive electrode plate, a negative electrode plate and a separator. The battery 51 may be a can-type (or rigid case) battery, as shown in FIG. 1, correspondingly, the case comprises a cap assembly and an outer case assembled with the cap assembly; or the battery 51 may be a pouch-type (or flexible case) battery, the case is made of a packaging film (such as an aluminum plastic film).

The heat exchanging plate 1 is used to support the battery 51 and exchange heat with the battery 51. The heat exchanging plate 1 comprises a flow passage portion 11 and a circumferential edge portion 12, the flow passage portion 11 is provided with a flow passage F for a heat transfer medium to flow, the circumferential edge portion 12 is positioned outside the flow passage portion 11 and surrounds the flow passage portion 11, the circumferential edge portion 12 is positioned below an edge frame beam 2A, the flow passage portion 11 and the edge frame beam 2A together form an accommodation space opening upwardly, the flow passage portion 11 is used to support the battery 51 and exchange heat with the battery 51. Specifically, the heat exchanging plate 1 comprises a first plate 13 and a second plate 14; the second plate 14 is engaged with the first plate 13 from below, so the second plate 14 and the first plate 13 form a flow passage F for the heat transfer medium to flow. The first plate 13 and/or the second plate 14 may be formed by stamping. In order to improve the effect of exchange heat, the heat exchanging plate 1 is made of a material having high thermal conductivity, preferably a metal material, and more preferably an aluminum alloy material.

The lower frame 2 is positioned on the heat exchanging plate 1, the lower frame 2 and the heat exchanging plate 1 together form an accommodation space opening upwardly and accommodating the battery 51, the lower frame 2 is a hollow structure with a hollow cavity S. The lower frame 2 comprises an edge frame beam 2A, the edge frame beam 2A is circumferentially closed and opens in an up-down direction Z. The lower frame 2 further comprises an inner beam 2B, the inner beam 2B is positioned in the accommodation space and fixed to the edge frame beam 2A. The edge frame beam 2A and inner beam 2B can be made of metal, such as aluminum alloy, and can be a die casting member or an extrusion profile. For reducing weight, the edge frame beam 2A and the inner beam 2B may have cavities (that is, both the edge frame beam 2A and the inner beam 2B have hollow cavities S as described later), that is, the edge frame beam 2A and the inner beam 2B are profiles having cavities. It is noted that respective longitudinal directions of the edge frame beam 2A and the inner beam 2B may be at X direction and a transverse direction thereof may be at Y direction, or the longitudinal direction thereof may be at Y direction and the transverse direction thereof may be at X direction, but herein, the transverse direction and the longitudinal direction are the directions of the beam structure itself, that is, a local coordinate system, but a X-Y-Z direction of the battery box in FIG. 1 is a global coordinate system, so there is no strict correspondence between the two coordinate systems. Both the edge frame beam 2A and the inner beam 2B each comprise a bottom wall 21 and a top wall 22.

The protecting plate 3 is positioned below the heat exchanging plate 1, and protects the heat exchanging plate 1 from below. The protecting plate 3 comprises a main portion 31 and an outer peripheral portion 32 surrounding the main portion 31, the main portion 31 covers the flow passage portion 11 of the heat exchanging plate 1 from below, the outer peripheral portion 32 is positioned below the circumferential edge portion 12 of the heat exchanging plate 1.

The self-sealing riveting member 4 fixes the protecting plate 3, the heat exchanging plate 1 and the lower frame 2 together, the self-sealing riveting member 4 passes through the protecting plate 3 and the heat exchanging plate 1 along the up-down direction Z, and the self-sealing riveting member 4 is inserted into the lower frame 2 and at least partially exposed to the lower frame 2, the self-sealing riveting member 4 performs sealing at a first position P1 where the self-sealing riveting member 4 passes through the protecting plate 3, the self-sealing riveting member 4 performs sealing at a second position P2 where the self-sealing riveting member 4 is inserted into the lower frame 2. The benefit of the self-sealing riveting member 4 is that, sealing is directly performed at the first position P1 where the self-sealing riveting member 4 passes through the protecting plate 3 and at the second position P2 where the self-sealing riveting member 4 is inserted into the lower frame 2, but conventional screws or rivets cannot perform sealing directly at positions where they are inserted into/passes through, and require additional sealing means to perform sealing at positions where they are inserted into/passes through, thereby simplifying the assembling process and reducing the cost.

The self-sealing riveting member 4 can take a variety of forms.

FIG. 5 is an exploded cross-sectional view of a form of a self-sealing riveting member.

The self-sealing riveting member 4 shown in FIG. 5 is a pulling riveting member. The self-sealing riveting member 4 comprises a pulling riveting nut 41 and a pulling riveting bolt 42. The pulling riveting nut 41 comprises an internal thread tube body 411 and a convex portion 412, the convex portion 412 surrounds the internal thread tube body 411 and protrudes outwardly along a radial direction from an end of the internal thread tube body 411. The pulling riveting bolt 42 comprises an external threaded column 421 and a cover portion 422, the cover portion 422 surrounds the external threaded column 421 and protrudes outwardly along the radial direction from an end of the external threaded column 421.

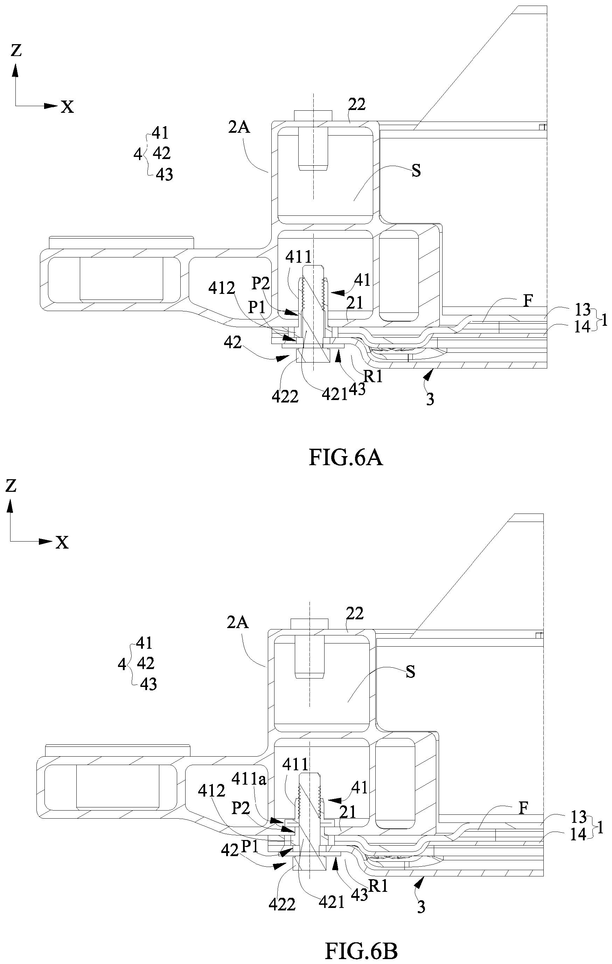

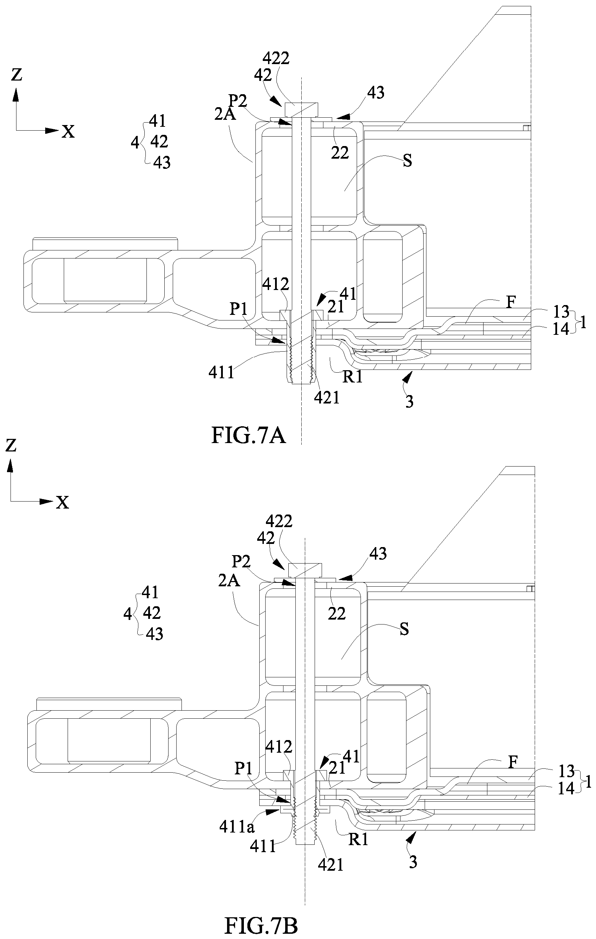

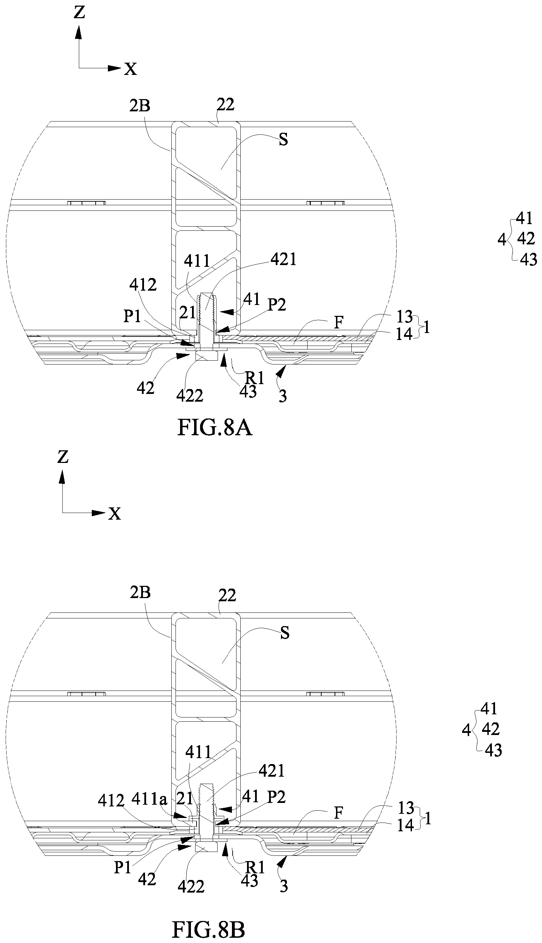

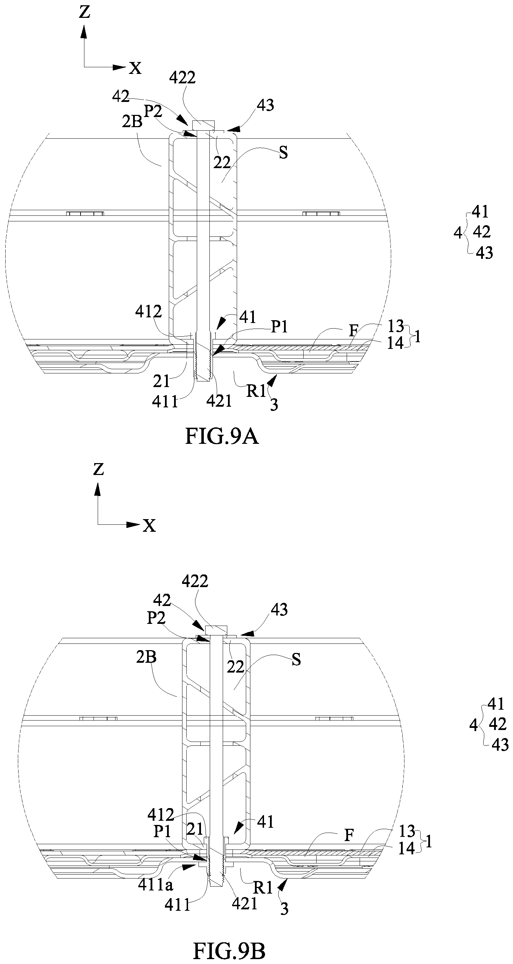

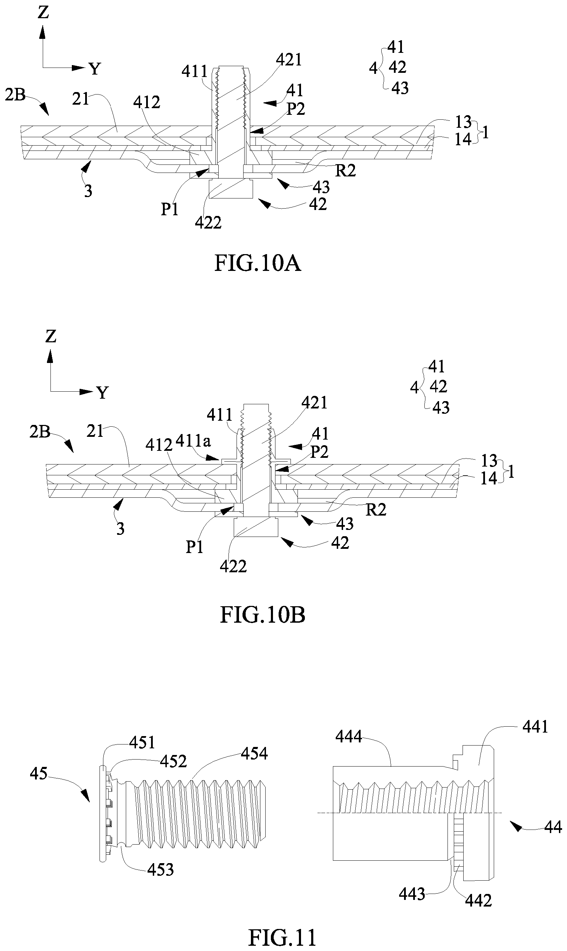

FIG. 6A is a cross-sectional view taken along a line A-A in FIG. 4 and rotated by 180 degrees, in which a pulling riveting member is not pulling-riveted. FIG. 6B is a cross-sectional view corresponding to FIG. 6A, in which the pulling riveting member has been pulling-riveted. FIG. 7A is a cross-sectional view corresponding to FIG. 6A, in which the pulling riveting member is rotated by 180 degrees and not pulling-riveted. FIG. 7B is a cross-sectional view corresponding to FIG. 7A, in which the pulling riveting member has been pulling-riveted. FIG. 8A is a cross-sectional view taken along a line B-B in FIG. 4 and rotated by 180 degrees, in which the pulling riveting member is not pulling-riveted. FIG. 8B is a cross-sectional view corresponding to FIG. 8A, in which the pulling riveting member has been pulling-riveted. FIG. 9A is a cross-sectional view corresponding to FIG. 8A, in which the pulling riveting member is rotated by 180 degrees and is not pulling-riveted. FIG. 9B is a cross-sectional view corresponding to FIG. 9A, in which the pulling riveting member has been pulling-riveted. FIG. 10A is a cross-sectional view taken along a line C-C in FIG. 4 and rotated by 180 degrees with an inner beam showing a bottom wall and the pulling riveting member not pulling-riveted. FIG. 10B is a cross-sectional view corresponding to FIG. 10A, in which the pulling riveting member has been pulling-riveted.

As shown in examples in FIG. 6A to FIG. 10B, the internal thread tube body 411 passes through the protecting plate 3, the heat exchanging plate 1 and the bottom wall 21 of the lower frame 2, and the internal thread tube body 411 is partially exposed to an outer side of the protecting plate 3, the heat exchanging plate 1 and the bottom wall 21 of the lower frame 2 in the up-down direction Z; the external threaded column 421 penetrates from an opposite outer side of the protecting plate 3, the heat exchanging plate 1 and the bottom wall 21 of the lower frame 2 in the up-down direction Z and the external threaded column 421 is in threaded engagement with the internal thread tube body 411; the convex portion 412 of the pulling riveting nut 41 abuts against a side of the bottom wall 21 of the lower frame 2 close to the cover portion 422 of the pulling riveting bolt 42 along the up-down direction Z; the exposed portion of the internal thread tube body 411 of the pulling riveting nut 41 is configured to form a protruding portion 411a through pulling riveting operation; the protruding portion 411a of the internal thread tube body 411 of the pulling riveting nut 41 and the cover portion 422 of the pulling riveting bolt 42 perform sealing from opposite sides of the up-down direction Z of the protecting plate 3, the heat exchanging plate 1 and the bottom wall 21 of the lower frame 2. The first position P1 is positioned at the protecting plate 3, the second position P2 is positioned at one of the bottom wall 21 and the top wall 22 of the lower frame 2 which is adjacent to the convex portion 412 from above.

Specifically, with reference to the pulling riveting bolt 42, the pulling riveting bolt 42 may be inserted from below the protecting plate 3 or from above the lower frame 2 along the up-down direction Z, and the pulling riveting nut 41 is opposite to the pulling riveting bolt 42 along the up-down direction Z.

As shown in FIG. 6A, FIG. 6B, FIG. 8A, FIG. 8B, FIG. 10A and FIG. 10B, the external threaded column 421 of the pulling riveting bolt 42 passes through the protecting plate 3 at the first position P1 from below the protecting plate 3 along the up-down direction Z, the external threaded column 421 of the pulling riveting bolt 42 passes through the heat exchanging plate 1, the external threaded column 421 of the pulling riveting bolt 42 is inserted into the bottom wall 21 of the lower frame 2 at the second position P2, and the external threaded column 421 of the pulling riveting bolt 42 is exposed in the hollow cavity S of the lower frame 2; the exposed portion of the internal thread tube body 411 of the pulling riveting nut 41 is positioned in the hollow cavity S of the lower frame 2; the convex portion 412 of the pulling riveting nut 41 is positioned at a lower side of the bottom wall 21 of the lower frame 2 along the up-down direction Z. In this way, the length of the pulling riveting bolt 42 may be made much shorter than in the case of FIGS. 7A, 7B, 9A and 9B to be described later, therefore the pulling riveting member can be miniaturized. Further, in examples shown in FIG. 6A, FIG. 6B, FIG. 8A and FIG. 8B, the convex portion 412 of the pulling riveting nut 41 is positioned at the lower side of the bottom wall 21 of the lower frame 2 along the up-down direction Z; the convex portion 412 is directly clamped by the bottom wall 21 of the lower frame 2 and the protecting plate 3. In examples shown in FIG. 10A and FIG. 10B, the convex portion 412 is directly clamped by the heat exchanging plate 1 and the protecting plate 3. In examples shown in FIG. 10A and FIG. 10B, the protecting plate 3 is provided with a second recessed portion R2, the convex portion 412 is accommodated in the second recessed portion R2, therefore the convex portion 412 can be accommodated without increasing the thickness of the protecting plate 3 to further meet the requirements of lightness.

As shown in FIG. 7A, FIG. 7B, FIG. 9A and FIG. 9B, the external threaded column 421 of the pulling riveting bolt 42 is inserted into the top wall 22 of the lower frame 2 from above the lower frame 2 along the up-down direction Z, the external threaded column 421 of the pulling riveting bolt 42 passes through the bottom wall 21 of the lower frame 2, the external threaded column 421 of the pulling riveting bolt 42 passes through the heat exchanging plate 1, the external threaded column 421 of the pulling riveting bolt 42 passes through the protecting plate 3 at the first position P1, and the external threaded column 421 of the pulling riveting bolt 42 is exposed below the protecting plate 3; the exposed portion of the internal thread tube body 411 of the pulling riveting nut 41 is positioned below the protecting plate 3. In examples shown in FIG. 7A, FIG. 7B, FIG. 9A and FIG. 9B, the protecting plate 3 is provided with a first recessed portion R1, the exposed portion of the internal thread tube body 411 of the pulling riveting nut 41 is positioned in the first recessed portion R1, thereby saving space, preventing the exposed portion from hitting the human body when carrying the battery box.

Whether the pulling riveting bolt 42 is inserted from below the protecting plate 3 or inserted from above the lower frame 2, in examples shown in FIG. 6A to FIG. 10B, the self-sealing riveting member 4 further comprises a gasket 43, the gasket 43 is sheathed to the external threaded column 421, and clamped between the cover portion 422 of the pulling riveting bolt 42 and the top wall 22 of the lower frame 2 or the protecting plate 3. The gasket 43 helps to strengthen the compressive strength of the corresponding position during the pulling riveting process and assists in enhancing the sealing of the corresponding position, especially when the gasket 43 is clamped between the cover portion 422 of the pulling riveting bolt 42 and the protecting plate 3 (due to a total thickness of the protecting plate 3 and the heat exchanging plate 1 in the up-down direction Z is smaller than a total thickness of the lower frame 2 in the up-down direction Z).

FIG. 11 is an exploded view of another form of a self-sealing riveting member, not of the invention.

The self-sealing riveting member 4 shown in FIG. 11 is a pressing riveting member. The self-sealing riveting member 4 comprises a pressing riveting nut 44 and a pressing riveting bolt 45. The pressing riveting nut 44 comprises a hat body 441, a nut embossing teeth 442, a nut guiding groove 443 and an internal thread tube portion 444, the nut embossing teeth 442, the nut guiding groove 443 and the internal thread tube portion 444 are provided to an inner side of an axial direction of the hat body 441. The pressing riveting bolt 45 comprises a hat portion 451, a bolt embossing teeth 452 a bolt guiding groove 453 and an external threaded rod portion 454, the bolt embossing teeth 452, the bolt guiding groove 453 and the external threaded rod portion 454 are provided to an inner side of the axial direction of the hat portion 451.

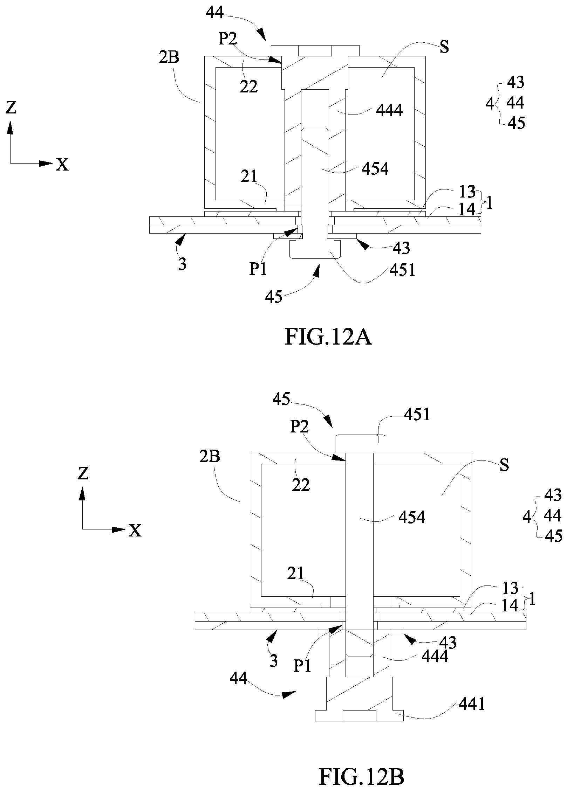

FIG. 12A is a cross-sectional view of another form of assembling of the self-sealing riveting member with a heat exchanging plate, the inner beam and a protecting plate of the battery box, in which the pressing riveting member is not pressing-riveted. FIG. 12B is a cross-sectional view corresponding to FIG. 12A, in which the pressing riveting member is rotated by 180 degrees and is not pressing-riveted.

The hat portion 451 of the pressing riveting bolt 45 and the hat body 441 of the pressing riveting nut 44 are respectively positioned to opposite sides of the up-down direction Z of the protecting plate 3, the heat exchanging plate 1 and the top wall 22 of the lower frame 2, the internal thread tube portion 444 of the pressing riveting nut 44 and the external threaded rod portion 454 of the pressing riveting bolt 45 pass through the protecting plate 3, the heat exchanging plate 1 and the lower frame 2 and perform engagement, the bolt embossing teeth 452 of the pressing riveting bolt 45 deforms a corresponding position where the bolt embossing teeth 452 of the pressing riveting bolt 45 passes through to be sealed and locked with the bolt guiding groove 453 of the pressing riveting bolt 45, and the nut embossing teeth 442 of the pressing riveting nut 44 deforms a corresponding position where the nut embossing teeth 442 of the pressing riveting nut 44 passes through to be sealed and locked with the nut guiding groove 443 of the pressing riveting nut 44, the first position P1 is positioned at the protecting plate 3, the second position P2 is positioned at the top wall 22 of the lower frame 2.

Similar to the aforementioned pulling riveting member, with reference to the pressing riveting bolt 45, the pressing riveting bolt 45 may be inserted from below the protecting plate 3 or above the lower frame 2 along the up-down direction Z, and the pressing riveting nut 44 is opposite to the pressing riveting bolt 45 along the up-down direction.

As shown in FIG. 12A, the pressing riveting bolt 45 passes through the protecting plate 3 at the first position P1 from below the protecting plate 3 along the up-down direction Z, the pressing riveting bolt 45 passes through the heat exchanging plate 1 and the bottom wall 21 of the lower frame 2, so as to at least seal the position where the pressing riveting bolt 45 passes through the protecting plate 3; the pressing riveting nut 44 is downwardly inserted into the top wall 22 and the bottom wall 21 of the lower frame 2 at the second position P2 along the up-down direction Z, and seals the position where the pressing riveting nut 44 is inserted into the top wall 22.

As shown in FIG. 12B, the pressing riveting bolt 45 is downwardly inserted into the top wall 22 of the lower frame 2 at the second position P2 along the up-down direction Z and passes through the bottom wall 21 of the lower frame 2, and seals the position where the pressing riveting bolt 45 is inserted into the top wall 22, the pressing riveting nut 44 passes through the protecting plate 3 at the first position P1 from below the protecting plate 3 along the up-down direction Z and the pressing riveting nut 44 passes through the heat exchanging plate 1 and the bottom wall 21 of the lower frame 2, so as to at least seal the position where the pressing riveting nut 44 passes through the protecting plate 3.

Whether the pressing riveting bolt 45 is inserted from below the protecting plate 3 or inserted from above the lower frame 2, in examples shown in FIG. 12A and FIG. 12B, the self-sealing riveting member 4 further comprises a gasket 43, the gasket 43 is sheathed to the external threaded rod portion 454, and clamped between the hat portion 451 of the pressing riveting bolt 45 and the protecting plate 3 or clamped between the hat body 441 of the pressing riveting nut 44 and the protecting plate 3. The gasket 43 helps to strengthen the compressive strength of the protecting plate 3 during the pressing riveting process and assists in enhancing the sealing of the protecting plate 3.

The above detailed description describes various exemplary embodiments, but is not intended to be limited to the specifically disclosed combinations. Accordingly, the various features disclosed herein can be combined together to form a plurality of additional combinations that are not shown for the sake of clarity.

## Claims

1. A battery box, comprising:
a heat exchanging plate (1);
a lower frame (2) positioned on the heat exchanging plate (1), the lower frame (2) and the heat exchanging plate (1) together forming an accommodation space opening upwardly and accommodating a battery (51), the heat exchanging plate (1) being used to support the battery (51) and exchange heat with the battery (51), the lower frame (2) being a hollow structure with a hollow cavity (S);
a protecting plate (3) positioned below the heat exchanging plate (1) and protecting the heat exchanging plate (1) from below;
a sealing riveting member (4) fixing the protecting plate (3), the heat exchanging plate (1) and the lower frame (2) together, the sealing riveting member (4) passing through the protecting plate (3) and the heat exchanging plate (1) along an up-down direction (Z), and the sealing riveting member (4) being inserted into the lower frame (2) and at least partially exposed to the lower frame (2), the sealing riveting member (4) performing sealing at a first position (P1) where the sealing riveting member (4) passes through the protecting plate (3), the sealing riveting member (4) performing sealing at a second position (P2) where the sealing riveting member (4) is inserted into the lower frame (2);
**characterized in that**
the lower frame (2) comprises a bottom wall (21) and a top wall (22),
the sealing riveting member (4) is a pulling riveting member and comprises a pulling riveting nut (41) and a pulling riveting bolt (42),
the pulling riveting nut (41) comprises an internal thread tube body (411) and a convex portion (412), the convex portion (412) surrounds the internal thread tube body (411) and protrudes outwardly along a radial direction from an end of the internal thread tube body (411);
the pulling riveting bolt (42) comprises an external threaded column (421) and a cover portion (422), the cover portion (422) surrounds the external threaded column (421) and protrudes outwardly along the radial direction from an end of the external threaded column (421);
the internal thread tube body (411) passes through the protecting plate (3), the heat exchanging plate (1) and the bottom wall (21) of the lower frame (2), and the internal thread tube body (411) is partially exposed to an outer side of the protecting plate (3), the heat exchanging plate (1) and the bottom wall (21) of the lower frame (2) in the up-down direction (Z);
the external threaded column (421) penetrates from an opposite outer side of the protecting plate (3), the heat exchanging plate (1) and the bottom wall (21) of the lower frame (2) in the up-down direction (Z) and the external threaded column (421) is in threaded engagement with the internal thread tube body (411);
the convex portion (412) of the pulling riveting nut (41) abuts against a side of the bottom wall (21) of the lower frame (2) close to the cover portion (422) of the pulling riveting bolt (42) along the up-down direction (Z);
the exposed portion of the internal thread tube body (411) of the pulling riveting nut (41) is configured to form a protruding portion (411a) through pulling riveting operation;
the protruding portion (411a) of the internal thread tube body (411) of the pulling riveting nut (41) and the cover portion (422) of the pulling riveting bolt (42) perform sealing from opposite sides of the up-down direction (Z) of the protecting plate (3), the heat exchanging plate (1) and the bottom wall (21) of the lower frame (2), the first position (P1) is positioned at the protecting plate (3), the second position (P2) is positioned at one of the bottom wall (21) and the top wall (22) of the lower frame (2) which is adjacent to the convex portion (412) from above.

2. The battery box according to claim 1, wherein
the external threaded column (421) of the pulling riveting bolt (42) passes through the protecting plate (3) at the first position (P1) from below the protecting plate (3) along the up-down direction (Z), the external threaded column (421) of the pulling riveting bolt (42) passes through the heat exchanging plate (1), the external threaded column (421) of the pulling riveting bolt (42) is inserted into the bottom wall (21) of the lower frame (2) at the second position (P2), and the external threaded column (421) of the pulling riveting bolt (42) is exposed in the hollow cavity (S) of the lower frame (2);
the exposed portion of the internal thread tube body (411) of the pulling riveting nut (41) is positioned in the hollow cavity (S) of the lower frame (2);
the convex portion (412) of the pulling riveting nut (41) is positioned at a lower side of the bottom wall (21) of the lower frame (2) along the up-down direction (Z).

3. The battery box according to claim 1, wherein
the external threaded column (421) of the pulling riveting bolt (42) is inserted into the top wall (22) of the lower frame (2) from above the lower frame (2) along the up-down direction (Z) at the second position (P2), the external threaded column (421) of the pulling riveting bolt (42) passes through the bottom wall (21) of the lower frame (2), the external threaded column (421) of the pulling riveting bolt (42) passes through the heat exchanging plate (1), the external threaded column (421) of the pulling riveting bolt (42) passes through the protecting plate (3) at the first position (P1), and the external threaded column (421) of the pulling riveting bolt (42) is exposed below the protecting plate (3);
the exposed portion of the internal thread tube body (411) of the pulling riveting nut (41) is positioned below the protecting plate (3).

4. The battery box according to claim 3, wherein
the protecting plate (3) is provided with a first recessed portion (R1), the exposed portion of the internal thread tube body (411) of the pulling riveting nut (41) is positioned in the first recessed portion (R1).

5. The battery box according to claim 3, wherein
the convex portion (412) of the pulling riveting nut (41) is positioned at the lower side of the bottom wall (21) of the lower frame (2) along the up-down direction (Z);
the convex portion (412) is directly clamped by the bottom wall (21) of the lower frame (2) and the protecting plate (3).

6. The battery box according to claim 3, wherein
the convex portion (412) is directly clamped by the heat exchanging plate (1) and the protecting plate (3).

7. The battery box according to claim 6, wherein
the protecting plate (3) is provided with a second recessed portion (R2), the convex portion (412) is accommodated in the second recessed portion (R2).

## Patentansprüche

1. Batteriekasten, umfassend:
eine Wärmetauschplatte (1);
einen unteren Rahmen (2), der auf der Wärmetauschplatte (1) positioniert ist, wobei der untere Rahmen (2) und die Wärmetauschplatte (1) zusammen einen Aufnahmeraum bilden, der nach oben offen ist und eine Batterie (51) aufnimmt, wobei die Wärmetauschplatte (1) verwendet wird, um die Batterie (51) zu tragen und Wärme mit der Batterie (51) auszutauschen, wobei es sich bei dem unteren Rahmen (2) um eine hohle Struktur mit einem Hohlraum (S) handelt;
eine Schutzplatte (3), die unter der Wärmetauschplatte (1) positioniert ist und die Wärmetauschplatte (1) von unten schützt;
ein Dichtnietelement (4), das die Schutzplatte (3), die Wärmetauschplatte (1) und den unteren Rahmen (2) aneinander befestigt, wobei das Dichtnietelement (4) entlang einer Aufwärts-Abwärts-Richtung (Z) durch die Schutzplatte (3) und die Wärmetauschplatte (1) läuft und das Dichtnietelement (4) in den unteren Rahmen (2) eingesteckt ist und dem unteren Rahmen (2) mindestens teilweise ausgesetzt ist, wobei das Dichtnietelement (4) Dichten an einer ersten Position (P1) ausführt, an der das Dichtnietelement (4) durch die Schutzplatte (3) läuft, und das Dichtnietelement (4) Dichten an einer zweiten Position (P2) ausführt, an der das Dichtnietelement (4) in den unteren Rahmen (2) eingesteckt ist;
**dadurch gekennzeichnet, dass**
der untere Rahmen (2) eine Bodenwand (21) und eine Deckwand (22) umfasst,
es sich bei dem Dichtnietelement (4) um ein Zugnietelement handelt, das eine Zugnietmutter (41) und eine Zugnietschraube (42) umfasst,
die Zugnietmutter (41) einen Innengewinderöhrenkörper (411) und einen konvexen Abschnitt (412) umfasst, wobei der konvexe Abschnitt (412) den Innengewinderöhrenkörper (411) umgibt und entlang einer Radialrichtung von einem Ende des Innengewinderöhrenkörpers (411) nach außen vorsteht;
die Zugnietschraube (42) einen mit einem Außengewinde versehenen Schaft (421) und einen Abdeckabschnitt (422) umfasst, wobei der Abdeckabschnitt (422) den mit einem Außengewinde versehenen Schaft (421) umgibt und entlang der Radialrichtung von einem Ende des mit einem Außengewinde versehenen Schafts (421) nach außen vorsteht;
der Innengewinderöhrenkörper (411) durch die Schutzplatte (3), die Wärmetauschplatte (1) und die Bodenwand (21) des unteren Rahmens (2) läuft und der Innengewinderöhrenkörper (411) in der Aufwärts-Abwärts-Richtung (Z) einer Außenseite der Schutzplatte (3), der Wärmetauschplatte (1) und der Bodenwand (21) des unteren Rahmens (2) teilweise ausgesetzt ist;
der mit einem Außengewinde versehene Schaft (421) in der Aufwärts-Abwärts-Richtung (Z) von einer gegenüberliegenden äußeren Seite der Schutzplatte (3), der Wärmetauschplatte (1) und der Bodenwand (21) des unteren Rahmens (2) penetriert und sich der mit einem Außengewinde versehene Schaft (421) mit dem Innengewinderöhrenkörper (411) im Gewindeeingriff befindet;
der konvexe Abschnitt (412) der Zugnietmutter (41) entlang der Aufwärts-Abwärts-Richtung (Z) an einer Seite der Bodenwand (21) des unteren Rahmens (2) nah bei dem Abdeckabschnitt (422) der Zugnietschraube (42) anliegt;
der freiliegende Abschnitt des Innengewinderöhrenkörpers (411) der Zugnietmutter (41) dazu konfiguriert ist, durch einen Zugnietvorgang einen vorstehenden Abschnitt (411a) zu bilden;
der vorstehende Abschnitt (411a) des Innengewinderöhrenkörpers (411) der Zugnietmutter (41) und der Abdeckabschnitt (422) der Zugnietschraube (42) Dichten von gegenüberliegenden Seiten der Aufwärts-Abwärts-Richtung (Z) der Schutzplatte (3), der Wärmetauschplatte (1) und der Bodenwand (21) des unteren Rahmens (2) aus ausführen, die erste Position (P1) an der Schutzplatte (3) positioniert ist, die zweite Position (P2) an einer von der Bodenwand (21) und der Deckwand (22) des unteren Rahmens (2), die dem konvexen Abschnitt (412) von oben benachbart ist, positioniert ist.

2. Batteriekasten nach Anspruch 1, wobei
der mit einem Außengewinde versehene Schaft (421) der Zugnietschraube (42) an der ersten Position (P1) von unter der Schutzplatte (3) entlang der Aufwärts-Abwärts-Richtung (Z) durch die Schutzplatte (3) läuft, der mit einem Außengewinde versehene Schaft (421) der Zugnietschraube (42) durch die Wärmetauschplatte (1) läuft, der mit einem Außengewinde versehene Schaft (421) der Zugnietschraube (42) an der zweiten Position (P2) in die Bodenwand (21) des unteren Rahmens (2) eingesteckt ist und der mit einem Außengewinde versehene Schaft (421) der Zugnietschraube (42) in dem Hohlraum (S) des unteren Rahmens (2) freiliegt;
der freiliegende Abschnitt des Innengewinderöhrenkörpers (411) der Zugnietmutter (41) in dem Hohlraum (S) des unteren Rahmens (2) positioniert ist;
der konvexe Abschnitt (412) der Zugnietmutter (41) entlang der Aufwärts-Abwärts-Richtung (Z) an einer unteren Seite der Bodenwand (21) des unteren Rahmens (2) positioniert ist.

3. Batteriekasten nach Anspruch 1, wobei
der mit einem Außengewinde versehene Schaft (421) der Zugnietschraube (42) entlang der Aufwärts-Abwärts-Richtung (Z) an der zweiten Position (P2) von über dem unteren Rahmen (2) in die Deckwand (22) des unteren Rahmens (2) eingesteckt ist, der mit einem Außengewinde versehene Schaft (421) der Zugnietschraube (42) durch die Bodenwand (21) des unteren Rahmens (2) läuft, der mit einem Außengewinde versehene Schaft (421) der Zugnietschraube (42) durch die Wärmetauschplatte (1) läuft, der mit einem Außengewinde versehene Schaft (421) der Zugnietschraube (42) an der ersten Position (P1) durch die Schutzplatte (3) läuft und der mit einem Außengewinde versehene Schaft (421) der Zugnietschraube (42) unter der Schutzplatte (3) freiliegt;
der freiliegende Abschnitt des Innengewinderöhrenkörpers (411) der Zugnietmutter (41) unter der Schutzplatte (3) positioniert ist;

4. Batteriekasten nach Anspruch 3, wobei
die Schutzplatte (3) mit einem ersten zurückgesetzten Abschnitt (R1) versehen ist, der freiliegende Abschnitt des Innengewinderöhrenkörpers (411) der Zugnietmutter (41) in dem ersten zurückgesetzten Abschnitt (R1) positioniert ist.

5. Batteriekasten nach Anspruch 3, wobei
der konvexe Abschnitt (412) der Zugnietmutter (41) entlang der Aufwärts-Abwärts-Richtung (Z) an der unteren Seite der Bodenwand (21) des unteren Rahmens (2) positioniert ist,
der konvexe Abschnitt (412) direkt von der Bodenwand (21) des unteren Rahmens (2) und der Schutzplatte (3) geklemmt wird.

6. Batteriekasten nach Anspruch 3, wobei
der konvexe Abschnitt (412) direkt von der Wärmetauschplatte (1) und der Schutzplatte (3) geklemmt wird.

7. Batteriekasten nach Anspruch 6, wobei
die Schutzplatte (3) mit einem zweiten zurückgesetzten Abschnitt (R2) versehen ist, der konvexe Abschnitt (412) in dem zweiten zurückgesetzten Abschnitt (R2) aufgenommen ist.

## Revendications

1. Boîte de batterie comprenant :
une plaque d'échange de chaleur (1) ;
un cadre inférieur (2) positionné sur la plaque d'échange de chaleur (1), le cadre inférieur (2) et la plaque d'échange de chaleur (1) formant ensemble un espace de logement s'ouvrant vers le haut et logeant une batterie (51), la plaque d'échange de chaleur (1) étant utilisée pour soutenir la batterie (51) et échanger de la chaleur avec la batterie (51), le cadre inférieur (2) étant une structure creuse pourvue d'une cavité creuse (S) ;
une plaque de protection (3) positionnée sous la plaque d'échange de chaleur (1) et protégeant la plaque d'échange de chaleur (1) par-dessous ;
un élément de rivetage d'étanchéité (4) fixant la plaque de protection (3), la plaque d'échange de chaleur (1) et le cadre inférieur (2) ensemble, l'élément de rivetage d'étanchéité (4) traversant la plaque de protection (3) et la plaque d'échange de chaleur (1) le long d'une direction haut-bas (Z), et l'élément de rivetage d'étanchéité (4) étant inséré dans le cadre inférieur (2) et au moins partiellement exposé au cadre inférieur (2), l'élément de rivetage d'étanchéité (4) réalisant une étanchéité au niveau d'une première position (P1) où l'élément de rivetage d'étanchéité (4) traverse la plaque de protection (3), l'élément de rivetage d'étanchéité (4) réalisant une étanchéité au niveau d'une seconde position (P2) où l'élément de rivetage d'étanchéité (4) est inséré dans le cadre inférieur (2) ;
**caractérisée en ce que**
le cadre inférieur (2) comprend une paroi de fond (21) et une paroi supérieure (22),
l'élément de rivetage d'étanchéité (4) est un élément de rivetage à traction et comprend un écrou de rivetage de traction (41) et un boulon de rivetage de traction (42),
l'écrou de rivetage de traction (41) comprend un corps de tube à filetage interne (411) et une partie convexe (412), la partie convexe (412) entoure le corps de tube à filetage interne (411) et fait saillie vers l'extérieur le long d'une direction radiale depuis une extrémité du corps de tube à filetage interne (411) ;
le boulon de rivetage de traction (42) comprend une colonne à filetage externe (421) et une partie couverture (422), la partie couverture (422) entoure la colonne à filetage externe (421) et fait saillie vers l'extérieur le long d'une direction radiale depuis une extrémité de la colonne à filetage externe (421) ;
le corps de tube à filetage interne (411) traverse la plaque de protection (3), la plaque d'échange de chaleur (1) et la paroi de fond (21) du cadre inférieur (2), et le corps de tube à filetage interne (411) est partiellement exposé à un côté extérieur de la plaque de protection (3), de la plaque d'échange de chaleur (1) et de la paroi de fond (21) du cadre inférieur (2) dans la direction haut-bas (Z) ;
la colonne à filetage externe (421) pénètre depuis un côté extérieur opposé de la plaque de protection (3), de la plaque d'échange de chaleur (1) et de la paroi de fond (21) du cadre inférieur (2) dans la direction haut-bas (Z) et la colonne à filetage externe (421) vient en prise par filetage avec le corps de tube à filetage interne (411) ;
la partie convexe (412) de l'écrou de rivetage de traction (41) vient en butée contre un côté de la paroi de fond (21) du cadre inférieur (2) à proximité de la partie de couverture (422) du boulon de rivetage de traction (42) le long de la direction haut-bas (Z) ;
la partie exposée du corps de tube à filetage interne (411) de l'écrou de rivetage de traction (41) est conçue pour former une partie saillante (411a) du fait d'une opération de rivetage de traction ;
la partie saillante (411a) du corps de tube à filetage interne (411) de l'écrou de rivetage de traction (41) et la partie de couverture (422) du boulon de rivetage de traction (42) réalisent une étanchéité depuis des côtés opposés de la direction haut-bas (Z) de la plaque de protection (3), de la plaque d'échange de chaleur (1) et de la paroi de fond (21) du cadre inférieur (2), la première position (P1) est positionnée au niveau de la plaque de protection (3), la seconde position (P2) est positionnée au niveau de l'une de la paroi de fond (21) et de la paroi supérieure (22) du cadre inférieur (2) qui est adjacente à la partie convexe (412) par au-dessus.

2. Boîte de batterie selon la revendication 1, dans laquelle
la colonne à filetage externe (421) du boulon de rivetage de traction (42) traverse la plaque de protection (3) au niveau de la première position (P1) depuis le dessous de la plaque de protection (3) le long de la direction haut-bas (Z), la colonne à filetage externe (421) du boulon de rivetage de traction (42) traverse la plaque d'échange de chaleur (1), la colonne à filetage externe (421) du boulon de rivetage de traction (42) est insérée dans la paroi de fond (21) du cadre inférieur (2) au niveau de la seconde position (P2), et la colonne à filetage externe (421) du boulon de rivetage de traction (42) est exposée dans la cavité creuse (S) du cadre inférieur (2) ;
la partie exposée du corps de tube à filetage interne (411) de l'écrou de rivetage de traction (41) est positionnée dans la cavité creuse (S) du cadre inférieur (2) ;
la partie convexe (412) de l'écrou de rivetage de traction (41) est positionnée au niveau d'un côté inférieur de la paroi de fond (21) du cadre inférieur (2) le long de la direction haut-bas (Z).

3. Boîte de batterie selon la revendication 1, dans laquelle
la colonne à filetage externe (421) du boulon de rivetage de traction (42) est insérée dans la paroi supérieure (22) du cadre inférieur (2) depuis le dessus du cadre inférieur (2) le long de la direction haut-bas (Z) au niveau de la seconde position (P2), la colonne à filetage externe (421) du boulon de rivetage de traction (42) traverse la paroi de fond (21) du cadre inférieur (2), la colonne à filetage externe (421) du boulon de rivetage de traction (42) traverse la plaque d'échange de chaleur (1), la colonne à filetage externe (421) du boulon de rivetage de traction (42) traverse la plaque de protection (3) au niveau de la première position (P1), et la colonne à filetage externe (421) du boulon de rivetage de traction (42) est exposée sous la plaque de protection (3) ;
la partie exposée du corps de tube à filetage interne (411) de l'écrou de rivetage de traction (41) est positionnée sous la plaque de protection (3).

4. Boîte de batterie selon la revendication 3, dans laquelle
la plaque de protection (3) est pourvue d'une première partie en creux (R1), la partie exposée du corps de tube à filetage interne (411) de l'écrou de rivetage de traction (41) est positionnée dans la première partie en creux (R1).

5. Boîte de batterie selon la revendication 3, dans laquelle
la partie convexe (412) de l'écrou de rivetage de traction (41) est positionnée au niveau du côté inférieur de la paroi de fond (21) du cadre inférieur (2) le long de la direction haut-bas (Z) ;
la partie convexe (412) est directement serrée par la paroi de fond (21) du cadre inférieur (2) et la plaque de protection (3).

6. Boîte de batterie selon la revendication 3, dans laquelle
la partie convexe (412) est directement serrée par la plaque d'échange de chaleur (1) et la plaque de protection (3).

7. Boîte de batterie selon la revendication 6, dans laquelle
la plaque de protection (3) est pourvue d'une seconde partie en creux (R2), la partie convexe (412) est logée dans la seconde partie en creux (R2).
